# EUROPEAN PATENT SPECIFICATION

(11) **EP 2 261 125 B1**
(45) Date of publication and mention of the grant of the patent: **24.07.2013**
(21) Application number: 09715810.9
(22) Date of filing: 27.02.2009
(51) Int. Cl.: B65D 1/02, B29C 49/48, B29L 22/00

(54) **BLOW-MOLDED CONTAINER AND MOLDING METHOD THEREOF**
BLASGEFORMTER BEHÄLTER UND FORMVERFAHREN DAFÜR
RÉCIPIENT MOULÉ PAR SOUFFLAGE ET SON PROCÉDÉ DE MOULAGE

(30) Priority: 29.02.2008 JP 2008049273; 29.05.2008 JP 2008141039; 29.05.2008 JP 2008141694
(43) Date of publication of application: 15.12.2010
(73) Proprietor: Yoshino Kogyosho Co., Ltd., Tokyo 136-8531 (JP)
(72) Inventor: KUROSAWA, Takao, Tokyo 136-8531 (JP)
(74) Representative: Klingseisen, Franz
(86) International application number: PCT/JP2009/053771
(87) International publication number: WO 2009/107815

(56) References cited:
- EP-A1- 0 346 949
- JP-A- H0 780 916
- JP-A- H06 502 596
- JP-A- 2004 067 171
- US-A- 4 372 455
- US-A1- 2007 007 236

## Description

This invention relates to a synthetic resin blow-molded container according to the preamble of claim 1 and a direct blow-molding process for molding the same..
Such a container is disclosed in JP 2004 067171 A wherein at least three mold pinch-off lines are radially formed from the center of the bottom part.

The direct blow-molding process involves extruding cylindrical parison from an extruder, pinching the parison with a pair of blow mold halves, and blow molding this pinched parison into a container, as taught by Japanese published unexamined application 1995-214653 . At that time, one opening of the parison is pressed into a flat shape by the mold and welded to form a pinch-off portion in a part of the bottom, as disclosed in this document.

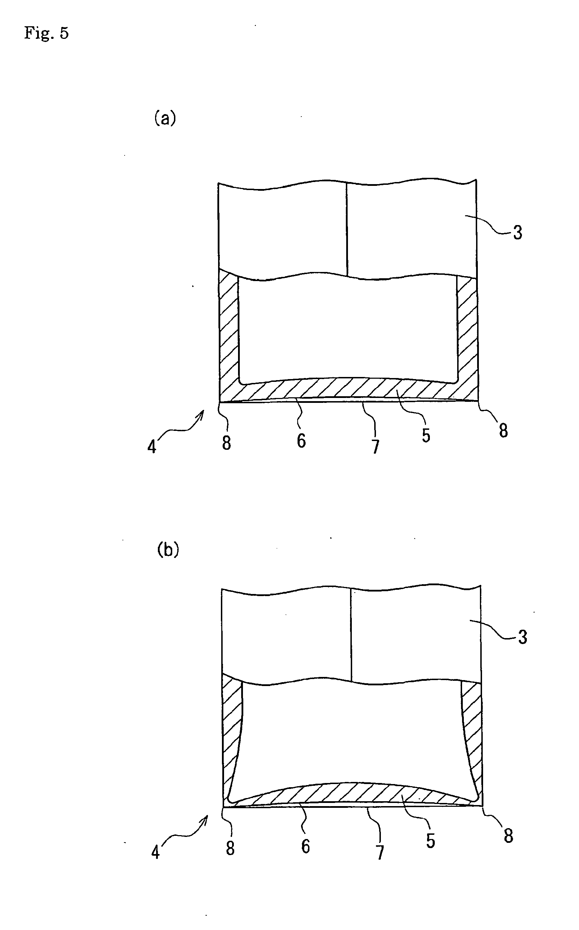

The pinch-off portion in the bottom of this blow-molded container does not generally project from an outer surface of the bottom, but leaves a linear pinch-off line as a pinch-off mark. However, as shown in Fig. 5 of Japanese published unexamined application 1994-024431, a dented portion or a groove is formed in an area of an inner bottom surface corresponding to the pinch-off line imprinted in the outer bottom surface.

The dented portion or groove is formed in the inner bottom surface under a thermal effect from a cut-off portion of the parison that is cut off from the portion of the parison to be blow-molded into a container. This cut-off portion is where there is less cooling from the blow mold. Because of the thermal action from the cut-off portion, there occurs a time lag in cooling and solidification in an area of the inner bottom surface corresponding to the cutoff portion attached to the outer bottom surface. The dented portion or groove is formed by aftercontraction caused by this time lag in cooling and solidification.

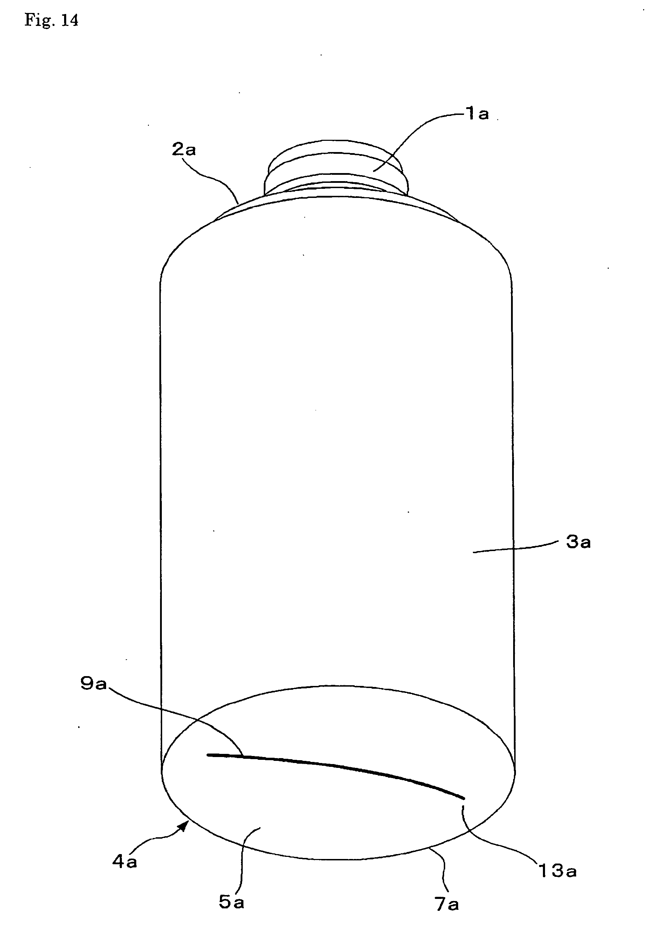

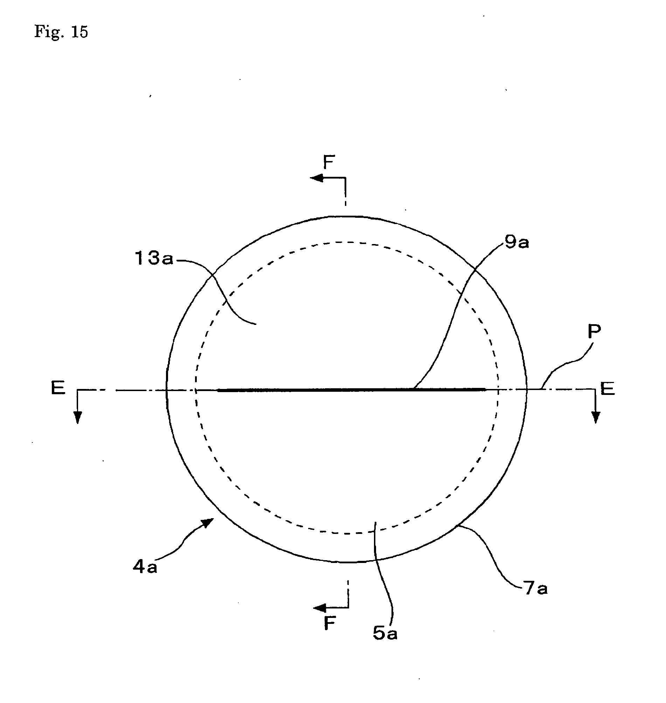

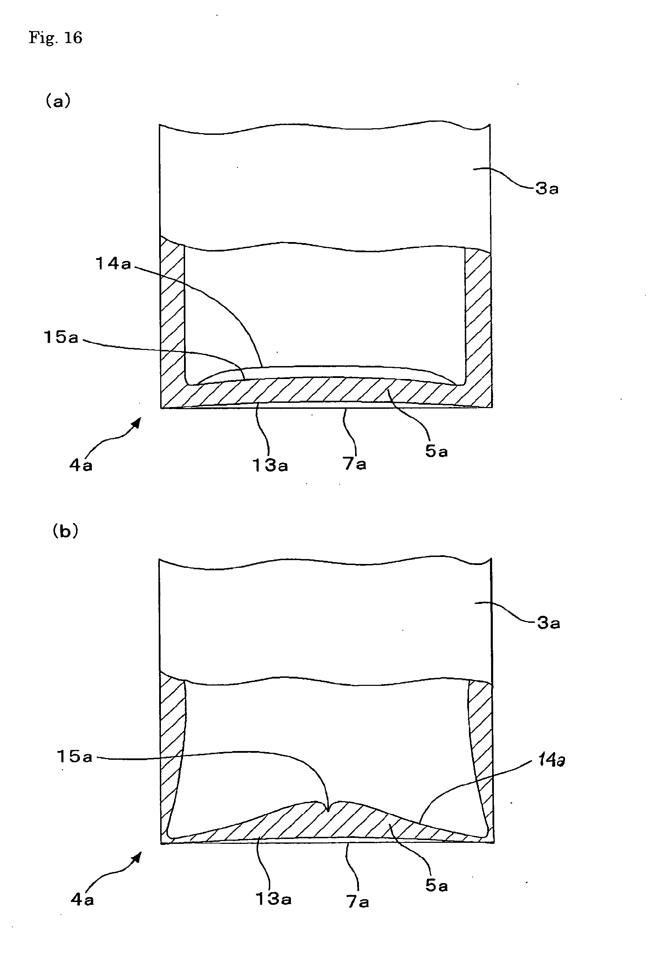

Figs. 14-16 show a structure of the pinch-off portion in the bottom of a blow-molded container made by the above-described conventional art Fig. 14 is a perspective view of the entire container viewed from an obliquely downward position. Fig. 15 is a bottom view of the container. Figs. 16a and 16b are vertical sections of an important portion taken along lines E-E and F-F, respectively, indicated by arrows in Fig. 15.

This blow-molded container comprises a cylindrical body 3a, a shoulder 2a at the upper end of the body 3a, a neck 1a disposed on top of the shoulder 2a, and a bottom 4a at the lower end of the body 3a. The bottom 4a comprises a bottom wall 5a slightly curved and dented toward the inside of the container and foot 7a which is the lower periphery of the bottom wall 5a.

A pinch-off line 9a is located in the center of an outer surface 13a of the bottom wall 5a so as to pass transversely across this outer surface 13a and to overlap a parting line P. As shown in Fig. 16, the inner surface 14a of the bottom wall 5a greatly differs in surface contour, depending on the direction of view.

The part of the bottom wall 5a viewed along the line E-E has little change in wall thickness. On the other hand, the part of the bottom wall 5a viewed along the line F-F shows a large change in thickness. This is because the thickness decreases toward the foot 7a under the effect of drawing deformation during the direct blow molding. Thus, the inner bottom surface 14a gives a mountain-like cross-section, with a mountain ridge extending linearly in the center.

Furthermore, a dented portion or groove 15a is formed due to the aftercontraction in an area of the inner bottom surface corresponding to a pinch-off line 9a imprinted in the outer bottom surface. This dented portion or groove 15a is formed along the entire length of the pinch-off line 9a.

This is because a single linear pinch-off line 9a has been formed, thus allowing thermal effect from the cutoff portion of the parison to act uniformly along the entire length of the pinch-off line 9a.

In the case of conventional art, the ridge portion is formed so as to pass transversely across the central area of the inner surface 14a of the bottom wall 5a, and the dented portion or groove 15a is formed along the ridge line. This dented portion or groove 15a would naturally become deep if the parison has a thick wall, because the thick wall would inevitably result in a large cutoff portion of the parison.

In the container having a square body, as disclosed in, e.g., Japanese published unexamined application 1995-016912, the foot on the border between the body and the bottom has a wall structure in which four side walls stand from the bottom at an acute angle. Therefore, in the blow molding, this lower portion of the body is an area quite vulnerable to local drawing and molding. In the technology of this document, the parison is pinched off with a pair of split mold halves. The pinch-off line, i.e., a pinch-off mark imprinted in the bottom of the molded container, is positioned along the parting line.

Since, in this case, the length of the pinch-off line 9 is 1.6 times as much as the outer diameter of the parison, generally there is only a short distance from each end of this pinch-off line 9 to the foot 7 at its cross-point with the parting line. For this reason, it is only to a small extent that the walls are thinned by local drawing and molding, even if the foot 7 is a portion formed by local drawing (See Fig.. 5a).

On the other hand, the corners 8 of the foot 7 on a diagonal line (t), which is positioned so as to cross the pinch-off line 9, have a long distance from the pinch-off line 9. In that case, the local drawing deformation are concentrated on these remote corners 8, and the walls are thinned to a large extent by local drawing and molding (See Fig. 5b).

In addition, the blow-molded products are limited to those configurations having no portion hooked by the mold at the time of release since the products have to be released from a pair of split mold halves.

JP 7 080916 A discloses a process for producing a blow molded container comprising molding a container having a square body and twisting the released container to give the body a helical shape, with each ridge having an identical helical pattern.

Thus, in conventional art, the parison is simply pressed flatly from right and left to form a linear pinch-off line. The inner bottom surface comprises a ridge portion, which is positioned so as to pass transversely across the central part of the bottom, and a groove-like dented area running along the ridge line. Therefore, the inner surface is very irregular. If the container thus molded is transparent or translucent, the large ups and downs would become visible and pose a problem in that as a product, the container might look uninviting in outer appearance.

If the container should be as hard as a glass bottle, the container is entirely required to have a thick wall. In that case, the entire parison, too, needs to have a thick wall, and therefore, the inner bottom surface would become more and more irregular, thus posing a problem in that this large irregularity has an adverse effect on the outer appearance of the container.

Furthermore, conventional blow-molded containers having a square body have to have those thin-wall corners located on the bottom parting line. Because of these corners, the container has a problem in that the bottom portion might be unable to maintain necessary mechanical strength.

If, in this case, the entire container has a thick wall in order for the container to have glass-like hardness, then the above-described foot of the bottom are also required to have significant thickness. As a result, the entire parison has to have a very thick wall, and this poses a problem in that there might be a decrease in moldability.

In the case where the container is entirely transparent so that it gives a crystal-like clear impression resembling a glass bottle, extreme changes in wall thickness in various portions of the bottom would become visible from outside. Such changes in thickness pose a problem of spoiled beauty, and the user might sense that something is wrong.

In addition to the problems described above, still another problem is that conventional blow-molded containers tend to have monotonous shapes that make overall outer appearance unattractive, because the blow-molded products have to be limited to those configurations allowing no portion to get hooked by the mold at the time of release.

This invention has been made to give solutions to the above problems found in conventional art. A technical problem to be solved by this invention is to smooth the uneven inner bottom surface on the other side of the outer bottom surface that has been imprinted conventionally with a pinch-off line and to make irregularity inconspicuous in a transparent or translucent direct blow-molded product. An object of this invention is to prevent the container from having unattractive outer appearance caused by an uneven inner bottom surface.

Another technical problem to be solved by this invention is to minimize and even up the extent of local drawing deformation at each corner of the bottom of a blow-molded container. Another object of this invention is to prevent any thin wall from being formed along the foot described above.

Still another technical problem to be solved by this invention is that a direct blow-molded product has a body in a shape of a helical square cylinder, which naturally has a portion or portions that might get hooked by the mold at the time of release. Still another object of this invention is to allow the container in the shape of a helical square cylinder to be effectively used because of its unique, humorous shape.

In order for the above problems to be solved, this invention comprises a blow-molded container according to claim 1 and a process for molding the same according to claim 5, both of which have constructive features described below.

The first constructive feature of this invention is a container comprising:
a cylindrical body with its lower end closed to form a bottom, a shoulder disposed on the body, a cylindrical neck disposed on top of the shoulder, and at least three pinch-off lines which are the pinch-off marks imprinted in the bottom wall,
wherein said at least three pinch-off lines are disposed radially from the center of an outer bottom surface.

In order for at least three pinch-off lines or marks to be radially disposed from the center of the outer bottom surface, the cylindrical parison is brought together toward a central axis at one end where the parison is pinched off. At that time, the wall is bent and folded so that three or more folded pieces meet together at the center to close the bottom, and the bottom has at least three divided areas.

A cutoff portion is a set of double-fold pieces of the wall which are connected to corresponding pinch-off lines, and is later cut off from the bottom. Each double-fold piece of the cutoff portion extending radially has a small volume, and therefore, would have only a small thermal effect on the area of the inner bottom surface corresponding to each pinch-off line imprinted in the outer bottom surface. On the other hand, at the center of the bottom where the folded pieces of the cutoff portion meet together, the cutoff portion has a substantially large volume, and would have a large thermal effect on the central area of the inner bottom surface corresponding to the centrally gathered pinch-off lines imprinted in the outer bottom surface.

Due to this configuration of the pinch-off lines, the thermal effect from the centrally gathered cutoff portion of the parison appears as aftercontraction caused by a cooling lag so that a dented portion is formed in the central area of the inner bottom surface corresponding to the central area of the outer bottom surface where all the pinch-off lines gather together. However, the thermal effect from extended pieces of the cutoff portion of the parison can be fully controlled in those areas of the inner bottom surface corresponding to radially extended portions of the pinch-off lines imprinted in the outer bottom surface.

In addition to the first constructive feature, a second constructive feature of this invention comprises a square body and four pinch-off lines disposed in the shape of a cross. Among these four lines, a linearly aligned pair of pinch-off lines is positioned on the parting line.

Due to this constructive feature, an extended piece of the cutoff portion of the parison connected to each pinch-off line can be made to have a volume a half as much as in conventional art. Thus, except for the central area of the bottom wall, the thermal effect from the extended pieces of the cutoff portion of the parison can be fully controlled in those areas, other than the central area, of the inner bottom surface corresponding to the radially extended portions of the pinch-off lines imprinted in the outer bottom surface. A synchronized motion can be easily obtained between a pair of blow split mold halves and a four-part bottom mold provided with blades of the mold pinch-off section for pinching off the parison.

In addition to the second constructive feature, a third constructive feature of this invention comprises a helically twisted square body, with each ridge having an identical helical pattern. Among the four ridges, a pair of ridges diagonally opposed to each other is positioned on the parting line.

In this embodiment, the square body is twisted helically, thus giving the container a dynamic element derived from the torsion. With the side walls of the body in a twisted form, there is a change in outer appearance because an upper portion of a side wall faces a direction different than the direction in which the lower portion of the same wall faces.

The parting line on the body is positioned on a pair of ridges diagonally opposed to each other among the four ridges formed on the body. Since the parting line runs along this pair of ridges, namely along the corners diagonally opposed to each other, the parting line on the body is less visible outwardly.

In addition to the second or third constructive feature described above, the fourth feature of this invention comprises that each pair of pinch-off lines is disposed linearly along one of respective diagonal lines on the bottom.

Four pinch-off lines positioned on the two diagonal lines form a cross shape, and four outermost ends of the pinch-off lines are disposed in the vicinity of respective bottom corners of the foot.

Therefore, those portions of the parison positioned near the outermost ends of the pinch-off lines are locally drawn and molded into bottom corners without extensive drawing displacement. Thus, the corners can be fully prevented from being thinned by local drawing deformation.

Since the local drawing deformation can be reduced to a low degree in the corner portions, the overall drawing and molding can be reasonably achieved.

Since the corners can be fully prevented from being thinned, there can be obtained uniform thickness of the body, especially in the ridge portions. Therefore, if the body is deformed with a twist, uniform twisting deformation can be obtained.

In addition to either one of the above features, the fifth constructive feature of this invention comprises that the entire body has the thickness that gives a level of hardness enough to prevent body walls from being easily strained and deformed.

The extent of local drawing deformation is fully restricted at the corners of the foot as long as the entire body has a thickness that gives the hardness enough to prevent body walls from being easily strained and deformed. Even if the body has a considerably thick wall, there would be no possibility that the foot may become less moldable.

If the parison has a thick wall, then the cutoff portion of the parison has naturally a large volume. As a result, the cutoff portion would have a larger thermal effect on the inner bottom surface than in the case of a thin wall. This large thermal effect from the cutoff portion is mostly concentrated on the central area of the bottom where the cutoff portion has the largest volume. In the surrounding areas of the inner bottom surface, other than the central area, the thermal effect is alleviated and reduced.

Thick-walled parison can give the entire molded product a texture resembling a glass bottle or ceramic ware.

In addition to any of the above-described constructive features, a sixth feature comprises that the entire container is made of a transparent or translucent synthetic resin.

The entirely transparent or translucent container gives a crystal-like clear impression. Under this condition, the container never creates a feeling that there is something undesirable about the wall thickness, as observed from outside, because the extent of wall thinning is suppressed at the foot.

In the case of the container having a square body, an angulated structure of the square body combined with a transparent or translucent material creates optically a crystal-like effect on the molded product. Especially if the container has a thick wall, the container takes on a texture resembling a glass bottle.

A seventh constructive feature of this invention comprises molding a container in its basic structure having a square body with a lower end closed to form a bottom, a shoulder connected to an upper end of this square body, and a cylindrical neck disposed on top of the shoulder, and immediately after the molded container has been released from the blow mold, while at a still thermally deformable temperature, twisting the released product between the shoulder and the bottom at a given central angle on a virtual central axis of the released product to give the body a helical shape.

Right after the container has been released from the mold, this released container has a straight square body. Therefore, the blow mold used for this released product can be of an ordinary split mold structure, and no special mold structure is required.

The straight square body of this released product is then twisted into a helical shape right after the release. How much twist should be given to the body can be set freely and easily to obtain a desired helical square body.

In addition to the seventh constructive feature, an eighth feature of this invention comprises that the twist and displacement of the body between the shoulder and the bottom is conducted by holding firmly a cutoff portion attached to the shoulder and another cutoff portion attached to the bottom of the released product.

Any cutoff portion of the parison is a waste to be removed once the molded product is complete. External force is applied on the cutoff portions when these portions are used to give the body a twist between the shoulder and the bottom. Even if applied force left any marks on these portions, there would be no defective products caused by the marks.

It should be noted here that the portions on which external force is applied are not limited to the cutoff portions of the parison, but may be other portions of the released product, such as the neck and the bottom, or may be a combination of a cutoff portion and a different portion of the product.

### EFFECTS OF THE INVENTION

This invention having the above constructive features has the following effects:

According to the first constructive feature, the thermal effect on a central area of the inner bottom surface comes from the bottom cutoff portion of the parison. This effect appears as aftercontraction caused by a time lag in cooling, and forms a dented portion only in the central area. In other portions of the inner bottom surface, the thermal effect from the cutoff portion can be fully controlled, and the aftercontraction can be substantially reduced to a low level. Thus, the inner bottom surface would have a dent in the central area, but generally would be flat. Since the inner bottom surface has no large irregularity externally, the transparent bottom viewed through from outside never disfeature the outer appearance of the container.

According to the second feature of this invention, four pinch-off lines are disposed in the shape of a cross, and among these four lines, a linearly aligned pair of lines is positioned on the parting line. Thus, except for the central area of the inner bottom surface, the thermal effect from the cutoff portion of the parison can be fully eliminated from the rest of the inner bottom surface. Consequently, those areas of the inner bottom surface, other than the central area, can be flatter than in the case of only one straight pinch-off line. Furthermore, a synchronized motion can be easily obtained between a pair of blow split mold halves and a four-part bottom mold provided with blades of a mold pinch-off section for pinching off the parison. Naturally, this synchronization helps obtain a steady and favorable molding operation for the container.

According to the third feature of this invention, the parting line on the body is less visible since it runs along the ridges, thus overlapping the corners. Even in the case of a helically twisted body, the blow-molded container with good outer appearance can be obtained because the parting line would never spoil the outer appearance of the container.

According to the fourth feature of this invention, the bottom corners of the foot can be adequately prevented from becoming thinner due to local drawing deformation. Therefore, the outer appearance of the container would not be badly affected by extremely thin bottom corners. Furthermore, the container would have sufficient mechanical strength because the bottom corners can be protected securely against insufficient mechanical strength caused by extremely thin corners.

In addition, since the local drawing deformation can be reduced to a low degree in the bottom corner portions, the overall drawing and molding can be reasonably achieved so that the containers can be molded steadily. The extended end of each pinch-off line can be positioned near a corner disposed on a diagonal line, and therefore, local drawing deformation can be reliably prevented from occurring at the bottom corner disposed on the diagonal line where extreme local drawing is apt to occur.

When the body is deformed with a twist, uniform twisting deformation can be obtained. As a result, the body would become precisely axisymmetrical so that a square helical body in good balance and appearance can be formed.

According to the fifth feature of this invention, the foot of the bottom is at no risk of getting less moldable, even if the parison has a thick wall. Thus, a hard container having a thick wall can be molded without fail.

At that time, the cutoff portion of the parison would have a larger thermal effect mostly on the central area of the inner bottom surface than on other areas thereof where the thermal effect is much eased. Even if the body had a thick wall, the inner bottom surface would not get highly irregular. The container thus obtained would positively be like a glass bottle in hardness and in appearance.

Because of a texture resembling glass bottle or ceramic ware, the blow molded container of this invention can give an impression of a high-quality product.

According to the sixth feature of this invention, a hard, clear container having a thick wall can be molded reliably since the container never creates a feeling that there is something undesirable about the wall thickness, as observed from outside.

In the case of the container having a square body, an angulated structure of the square body combined with a transparent or translucent material creates optically a crystal-like effect in the molded product. Especially if a thick wall is combined with a transparent or translucent square body, the container takes on a texture resembling the glass bottle, and provides a variety of crystal-like decorative effects.

According to the seventh feature of this invention, the blow mold used for this container can be of an ordinary split mold structure, and no special mold structure is required for release. Therefore, the container can be molded easily and at a low cost.

The straight square body of the released product is then twisted into a helical shape immediately after the release. This can be done freely and easily to obtain a desired helical square body.

According to the eighth feature of this invention, there would be no defective products caused the 'marks of operation', even if external force applied to the body for a twist has left any mark on the cutoff portion. The blow-molded container having a helical square body can be formed safely.

### BRIEF DESCRIPTION OF THE DRAWINGS

- Fig. 1: is a perspective view of the entire container in the first embodiment.
- Fig. 2: is a side view, partly shown in a vertical section, of the container in the embodiment shown in Fig 1, taken along line A-A indicated in Fig. 3,
- Fig. 3: is a bottom view of the container in the embodiment shown in Fig. 1.
- Fig. 4: is an explanatory diagram showing the movement of a pinch-off section for pinching the parison.

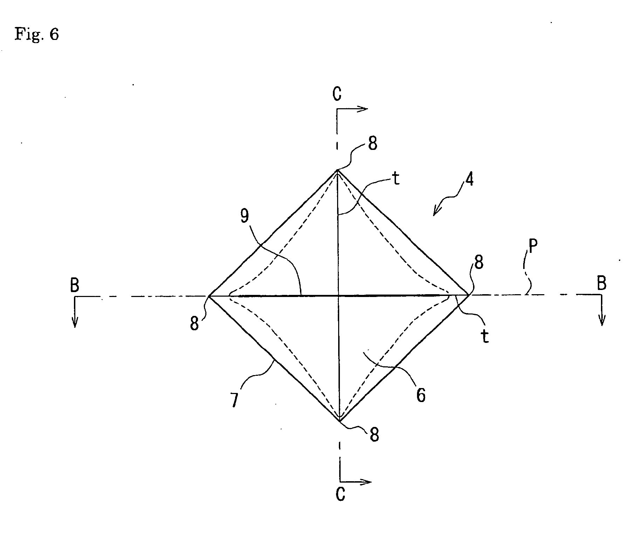

- Figs. 5a and 5b: are skewed side views, partly shown in a vertical section, of a container in conventional art, in which Fig. 5a is a view taken along line B-B; and Fig. 5b, taken along line C-C, as indicated in Fig. 6.
- Fig. 6: is a bottom view of the container in conventional art shown in Fig. 5.
- Fig. 7: is a perspective view of the entire container in the second embodiment
- Fig. 8: is a bottom view of the container in the second embodiment shown in Fig. 7.
- Figs. 9a and 9b: are vertical sections of an important portion of the container in the second embodiment shown in Fig. 7, respectively taken along line A-A and line B-B indicated in Fig. 8.
- Fig. 10: is a perspective view of the container in the second embodiment of this invention, viewed from an obliquely downward position, in which view the cutoff portion of the parison remains uncut.
- Fig. 11: is a perspective view of the entire container in the third embodiment.
- Fig. 12: is a bottom view of the container shown in Fig. 11.
- Fig. 13a and 13b: are vertical sections of an important portion of the container shown in Fig. 11, respectively taken along line C-C and line D-D indicated in Fig. 12.
- Fig. 14: is a perspective view of an entire container in conventional art.
- Fig. 15: is a bottom view of the container in conventional art shown in Fig. 14.
- Figs. 16a and 16b: are vertical sections of an important portion of the container in conventional art shown in Fig. 14, respectively taken along line E-E and line F-F indicated in Fig. 14.
- Fig.. 17: is a perspective view of the entire container in the fourth embodiment.
- Fig. 18: is a front view of the container shown in Fig. 17.
- Fig. 19: is a side view of the container shown in Fig. 17.
- Fig. 20: is a plan view of the container shown in Fig. 17.
- Fig. 21: is a bottom view of the container shown in Fig. 17.
- Fig. 22: is a front view of the entire container for explaining the molding process of this invention..

### DESCRIPTION OF REFERENCE SIGNS

1, 1a. Neck
2, 2a. Shoulder
3, 3a. Body
4, 4a. Bottom
5, 5a. Bottom wall
6. Bottom surface
7, 7a. Foot
8. Corner
9, 9a. Pinch-off line
10. Bottom split mold
11. Pinch-off section
12. Parison
13, 13a. Outer bottom surface
14, 14a. Inner bottom surface
15, 15a. Dented portion or groove
16. Cutoff portion of the parison
17. Helical side wall
18. Ridge
19. Released product
t. Diagonal line
P. Parting line

### PREFERRED EMBODIMENTS OF THE INVENTION

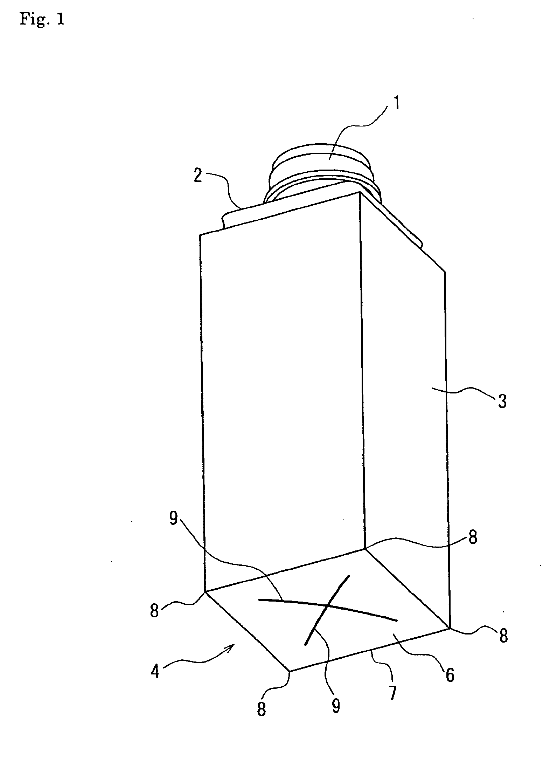

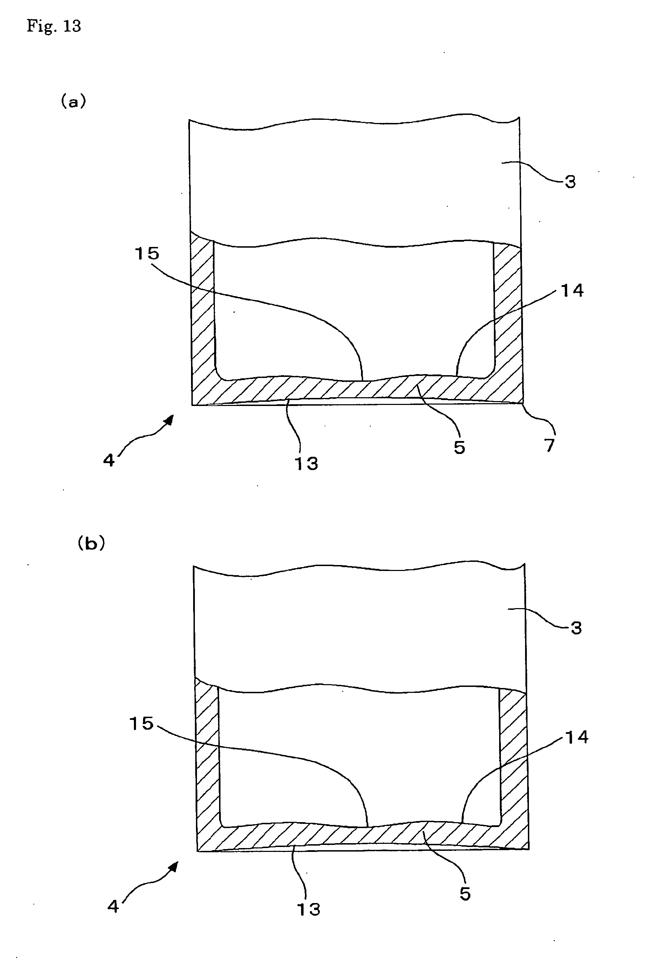

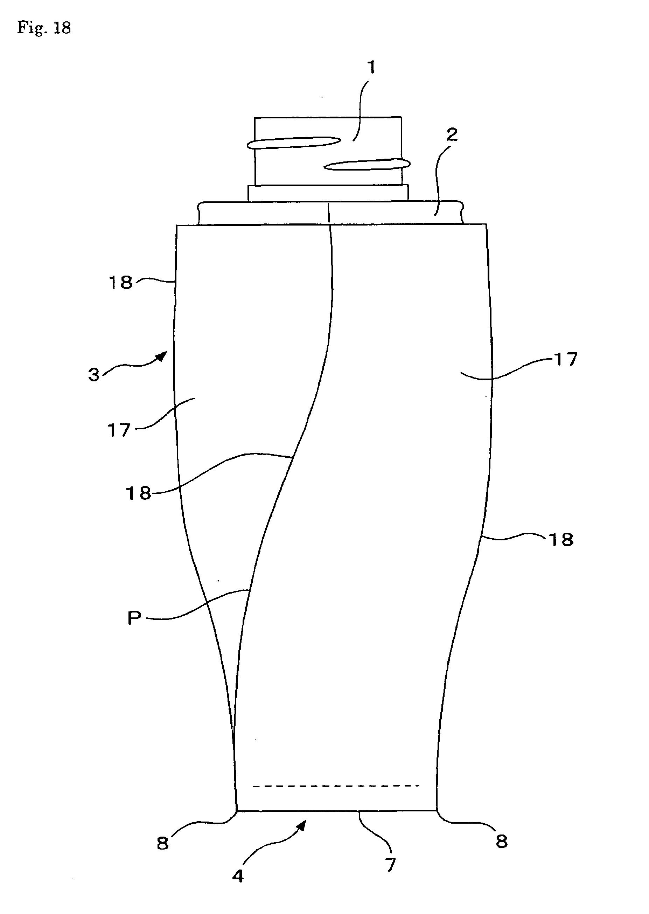

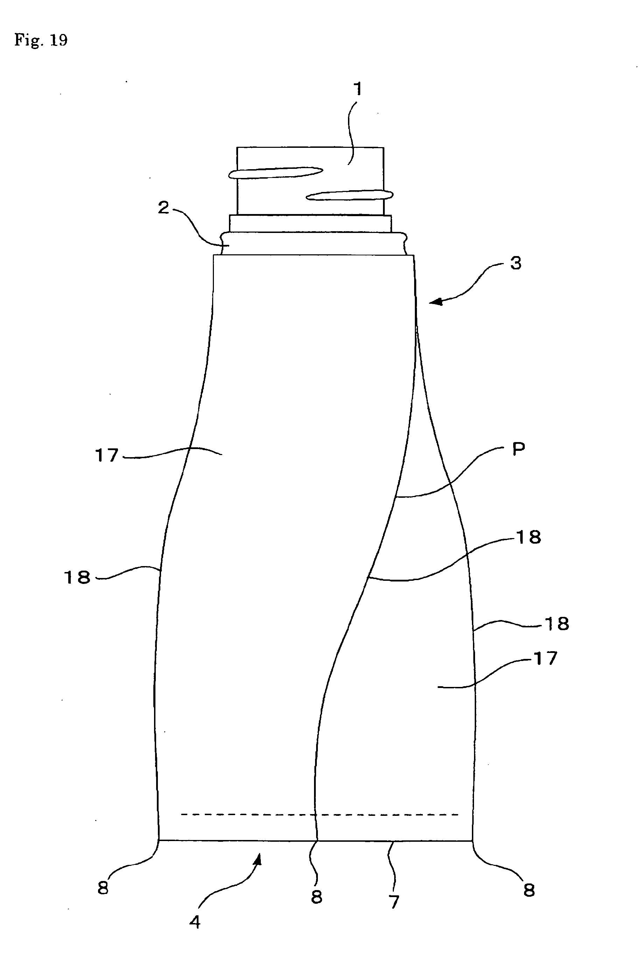

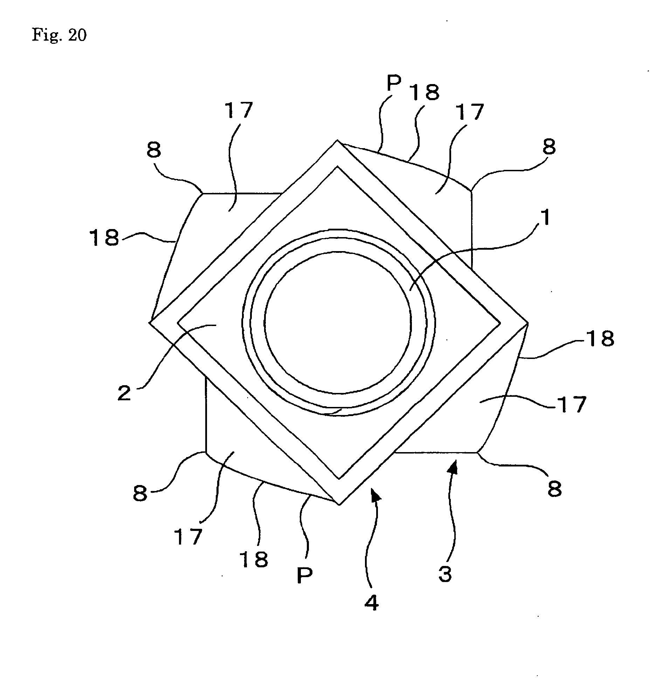

This invention is further described with respect to the preferred embodiments, now referring to Figs. 1-3, Figs. 7-13, and Figs. 17-22.

Figs. 1-3 show the container in the first embodiment. The container comprises a square cylindrical body 3 with a lower end closed to form a bottom 4, a shoulder 2 connected to an upper end of the body 3, and a cylindrical neck 1 disposed on top of the shoulder and provided with a screw thread carved on the outer peripheral surface.

The bottom 4 has a slightly concave bottom surface 6, which is the underside of a bottom wall 5 surrounded by foot 7. The bottom surface 6 is gently curved inward and slightly caved in, and is imprinted with four pinch-off lines 9 which are the marks left when the parison has been pinched off.

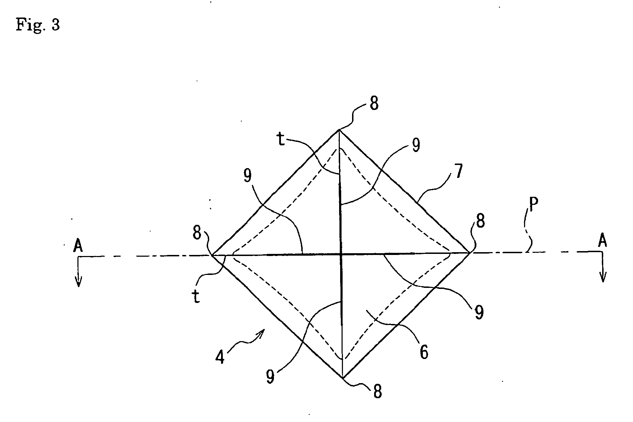

The pinch-off lines 9 (See Fig. 3) are disposed in the shape of a cross, thus forming two pairs of linearly aligned pinch-off lines 9. Each pair of them is positioned on respective diagonal lines (t) virtually depicted on the square bottom surface 6. One of the two diagonal lines (t) runs along the parting line P.

The blow molded container in this embodiment is obtained by a direct blow molding process. The parison 12 is extruded from an extruder by way of a die, and is clamped and pinched with a two-halved split mold. Blades of the pinch-off section of this split mold are disposed at the bottom of a mold cavity, and a lower portion of the parison 12 is cut by these blades and is thermally welded and sealed. At the upper end of the mold, an upper portion of the parison is also cut off by a parison cutter to form a cylindrical parison tube 12 that has the lower end closed. Then, an air nozzle is inserted from the top portion of the split mold, and air is blown into the parison 12 for blow molding.

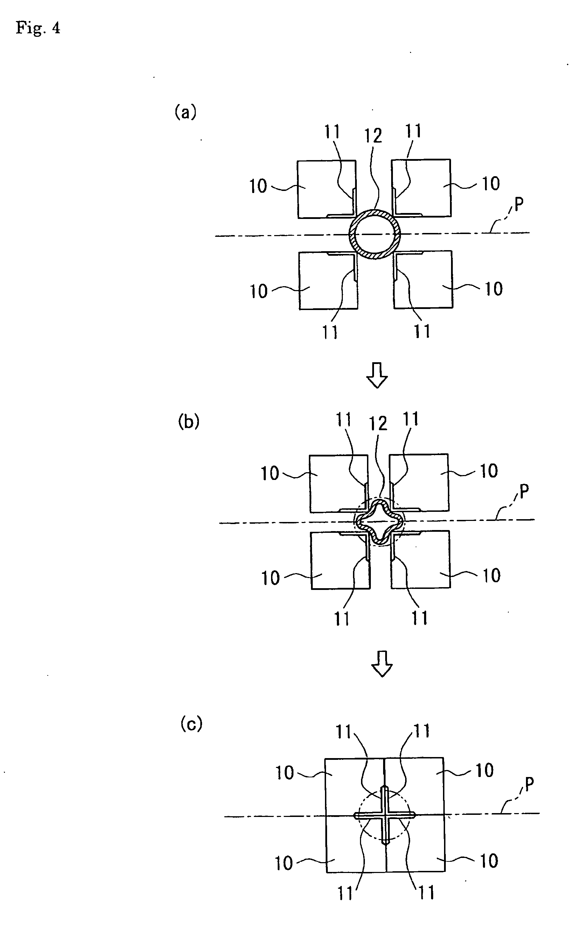

The cross-like pinch-off lines 9 can be formed by using, among other blow molds, a bottom split mold 10 (See Fig. 4) wherein the pinch-off section of the mold is divided into four parts to mold the bottom 4 of the blow molded container. It should be noted here that those portions other than the bottom 4, i.e., the body 3, the shoulder 2, and the neck 1 of the blow molded container, are molded as before by using a two-halved split mold.

Fig. 4 is an explanatory diagram in the form of a bottom view showing a process for pinching off the parison 12 with the blades of the pinch-off section 11 of the four-part bottom split mold 10. The parison 12 faces each corner blade of the four-part bottom split mold 10 (Fig. 4a). The four corner blades move toward the central axis of the parison 12 (Fig. 4b) and presses the parison 12 into the cross shape (Fig. 4c) to pinch the parison so that the cross-shaped pinch-off lines 9 are formed in the outer surface 13 of the bottom 4 of the parison 12. Fig. 4 shows the parting line P in a two-dot chain line.

Thus, if the parison 12 is blow molded while remaining pinched in the cross shape by the four-part pinch-off section 11, then the difference in wall thickness would be kept small even at the corners 8 of the foot 7 that are distant from the virtual central axis of drawing (See Fig. 3).

The containers in the first embodiment, as shown in the drawings, were molded by using a transparent synthetic resin, such as PET, etc., so as to have thick walls. The measurements were as follows:
The neck 1 with a screw thread on the outer surface had an outer diameter of 16 mm and a bore diameter of 10 mm. The body 3 had a height of 650 mm, a side wall width of 27 mm, and a wall thickness of 2.5 mm in the central portion and 1.5 mm near the ridge. The bottom 4 had a bottom wall thickness of 3 mm in the central area, 4 mm in the middle of each side of the foot 7, and 2 mm at the corner 8.

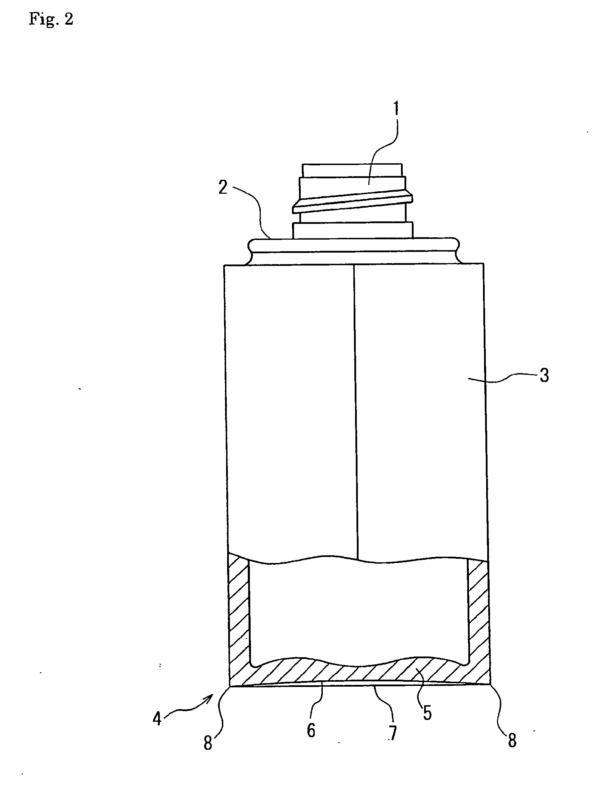

The central area of inner surface of the bottom wall 5 is right on the intersection of the pinch-off lines 9 in the cross shape. As shown in Fig. 2, this central area is dented from surrounding areas. The cutoff portion of the parison 12 could have had a thermal effect on the central area of the bottom wall before the cutoff portion is pinched off by the pinch-off section 11 of the bottom split mold 10. It is likely that a lag in the cooling speed is remarkable in the central area and causes aftercontraction to occur in this area.

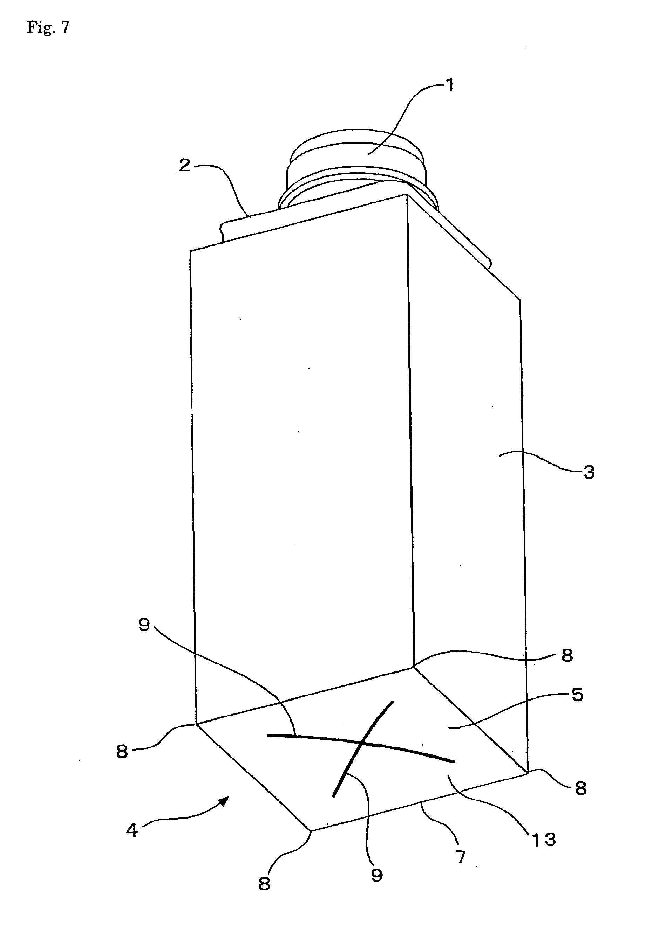

Figs. 7-9 show the container in the second embodiment The container comprises a square cylindrical body 3 with a lower end closed to form a bottom 4, a shoulder 2 connected to an upper end of the body 3, and a cylindrical neck 1 disposed on top of the shoulder 2 and provided with a screw thread carved on the outer peripheral surface.

The bottom 4 is a slightly concave surface surrounded by the foot 7. The bottom wall 5 constitutes a main part of the bottom 4, and an outer bottom surface 136 is the underside of the bottom wall 5. The concave surface of the bottom 4 is obtained by gently curving and slightly caving in the bottom wall 5 upward. Four pinch-off lines 9 are left in the bottom surface 13 as the pinch-off marks.

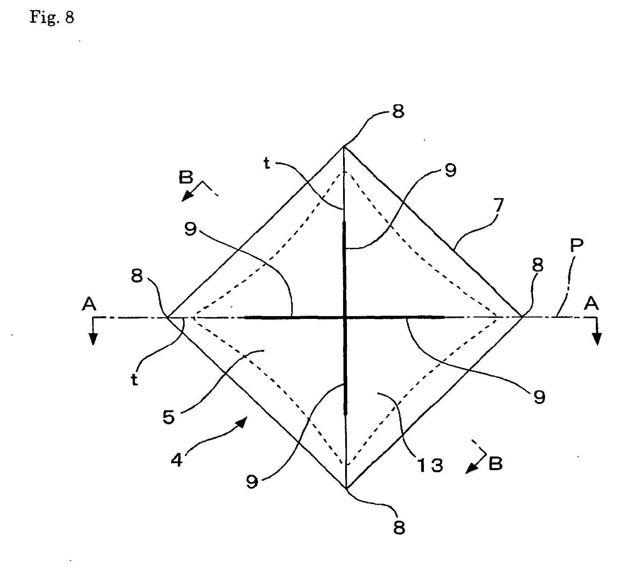

The pinch-off lines 9 (See Fig. 8) are disposed in the shape of a cross, thus forming two pairs of linearly aligned pinch-off lines 9. Each pair of them is positioned on one of the respective diagonal lines (t) virtually depicted on the tetragonal outer bottom surface 13. One of the two diagonal lines (t) runs along the parting line P.

The blow molded container in this second embodiment is also obtained by a direct blow molding process similar to the one used for the blow molded container in the first embodiment.

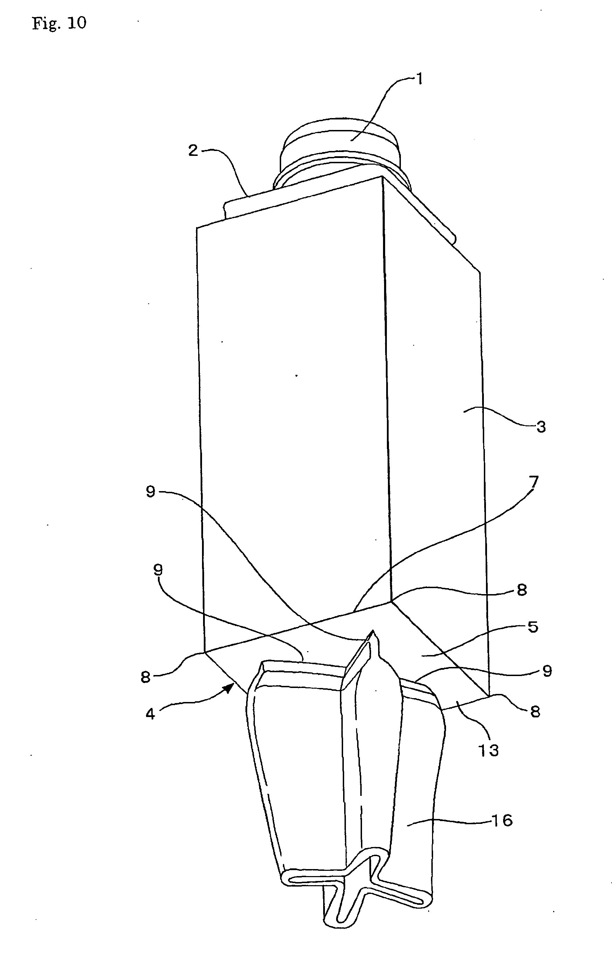

In this embodiment, the lower portion of the parison 12 is pressed by the pinch-off section of the mold to form a cutoff portion 16, which is not completely pinched off but remains to be attached to the main portion of the parison 12, which is to be blow molded into the container (See Fig. 10). The cutoff portion 16 is removed by pulling it away from the container immediately after release from the mold upon completion of the direct blow molding.

In this embodiment, too, as in the first embodiment, it is possible to form the pinch-off lines 9 in the shape of a cross, by using a bottom split mold 10 that enables the lower portion of the parison 12 to be divided into four parts to mold the bottom 4 of the blow molded container (See Fig. 4).

As described above, Fig. 4 is an explanatory diagram in the form of a bottom view showing a pinch-off process utilizing a four-part bottom split mold provided with blades of the pinch-off section.

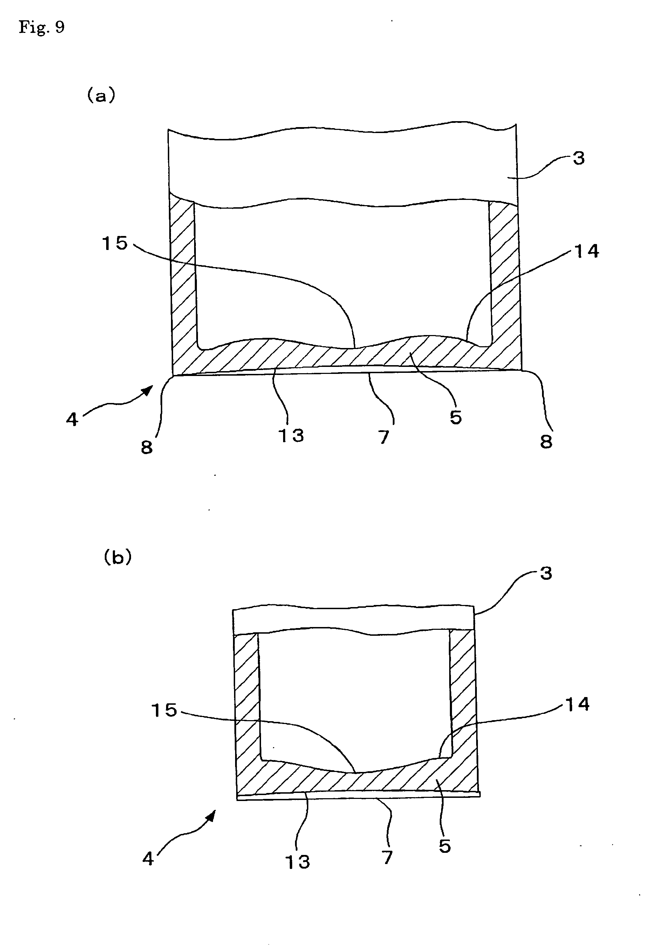

As shown in Fig. 4, if the parison 12 is blow molded while remaining pinched in the cross shape by the four-part pinch-off section 11, the parison can be blow molded into the container without reducing the thickness largely. This is because four 'sides' of the foot 7 to be molded are not so distant from the virtual central axis of drawing (See Fig. 9b). Even at the corners 8 of the foot 7 that are more distant from the virtual central axis of drawing than these 'sides', the degree of drawing would become substantially small, and the difference in wall thickness would be kept small. The reason is that these corners 8 are located near the extended ends of the pinch-off lines 9 that are formed by the pinch-off section 11 of the mold (See Fig. 9a).

As shown in Fig. 10, the cutoff portion 16 of the parison remains connected to the bottom wall 5 by way of the pinch-off lines 9. The thermal effect from the cutoff portion 16 is strong in the central area where all the pinch-off lines 9 meet together. On the other hand, in those areas of the bottom wall connected to the extended portions of the pinch-off lines 9, the thermal effect is a half as low as the level found in the conventional art.

As a result, a dented portion 15 is formed in an inner bottom surface 14 of the bottom wall 5 due to the aftercontraction caused by the thermal effect of the cutoff portion 16 on the central area of the bottom wall 5. Despite this, any overly irregular surface is hardly formed in the areas, other than the central area, of the inner bottom surface 14 corresponding to the extended portions of the pinch-off lines 9 imprinted in the outer bottom surface 13, because in those areas it is possible to control the aftercontraction caused by the thermal effect from the cutoff portion 16 of the parison (See Fig. 9a).

If it is desired to increase the wall thickness in the hope that the container has a texture like a glass bottle, a thicker wall would inevitably come along with a larger thermal effect of the cutoff portion 16 on the inner bottom surface 14 of the bottom wall 5. Actually, however, only a dented portion 15 is formed in the central area of the inner bottom surface 14. There has been no evidence of aftercontraction caused by the thermal effect in those areas, other than the central area, of the inner bottom surface 14 corresponding to the extended portions of the pinch-off lines 9 imprinted in the outer bottom surface 13.

This is because the thicker the parison 12 is, the larger thermal effect from the cutoff portion 16 of the parison is focused on the central area. As a result, it is deemed that there has been a reduced thermal effect on the areas, other than the central area, of the inner bottom surface 14 corresponding to the extended portions of the pinch-off lines 9 imprinted in the outer bottom surface 14.

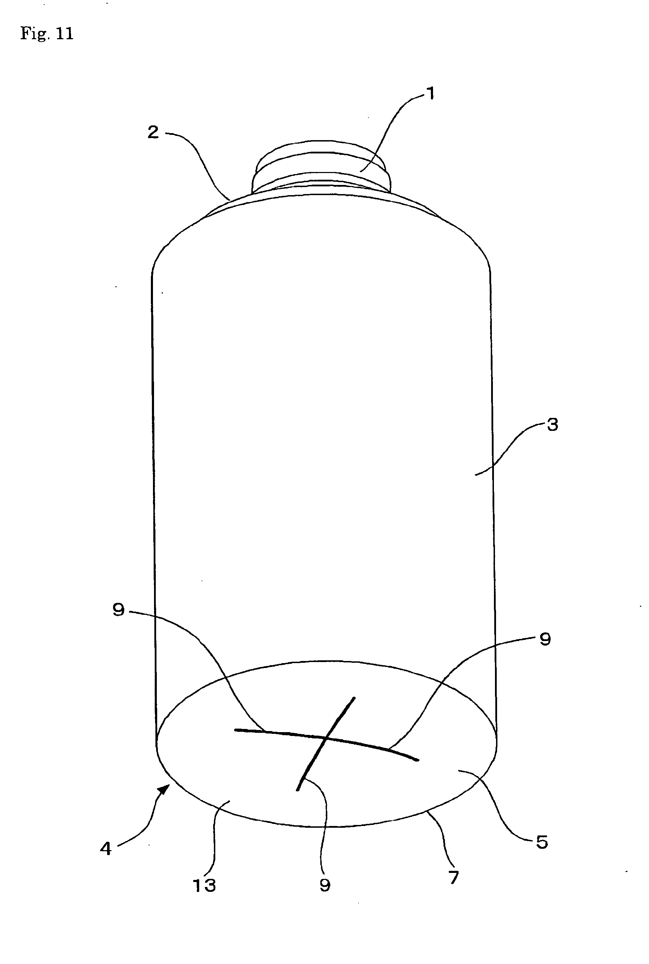

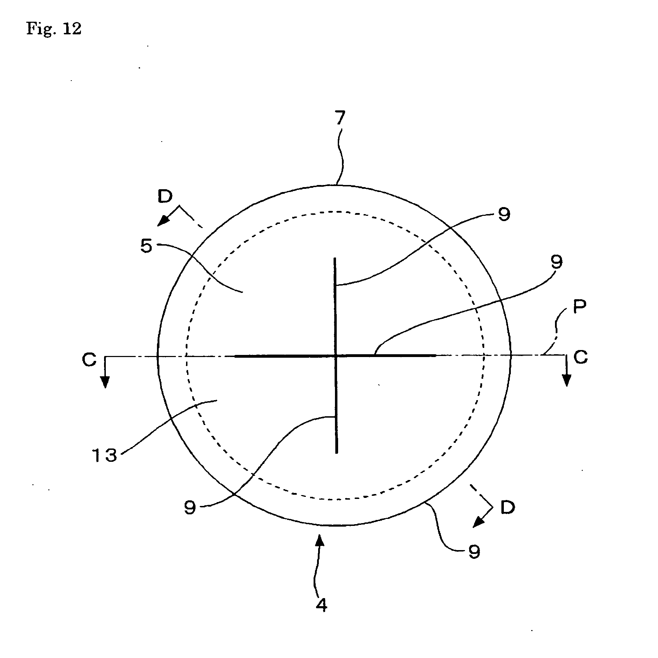

Figs. 11-13 show the container in the third embodiment. The container has a cylindrical body 3 and the bottom wall 5. The pinch-off lines 9 are disposed in the shape of a cross on the outer surface 13 of the bottom wall 5. A pair of linearly aligned pinch-off lines 9 runs along the parting line P (See Fig. 12).

In the third embodiment, too, as in the second one, a dented portion 15 is formed in the central area of the inner surface 14 of the bottom wall 5, but the surface is generally flat and smooth in the rest of the inner surface 14.

In the case of the third embodiment, the foot 7 should be equally thick along the entire periphery because the foot 7 is equally distant from the center of drawing. But at the time of a pinch-off operation, a thick portion is formed at each end of each pinch-off line 9. Due to this thick portion, the portions of the foot 7 opposed to all the extended ends of the pinch-off lines 9 (See Fig. 12a) have to get slightly thicker than in other portions.

Thus, the container of this invention has a curved and dented portion 15 formed in the central area of the inner surface 14 of the bottom wall 5. This dented portion 15 can be utilized as a location to put a lower opening of a siphoning pipe of a lift pump, thus ensuring that the contents can be effectively sucked up to the last drop.

The above preferred embodiments have been described by utilizing four pinch-off lines 9. However, it should be understood that the number of the pinch-off lines 9 is not limited to four, but three or five lines can also be formed. It is generally preferred that the pinch-off lines are formed in the same number as the number of corners which constitute the body.

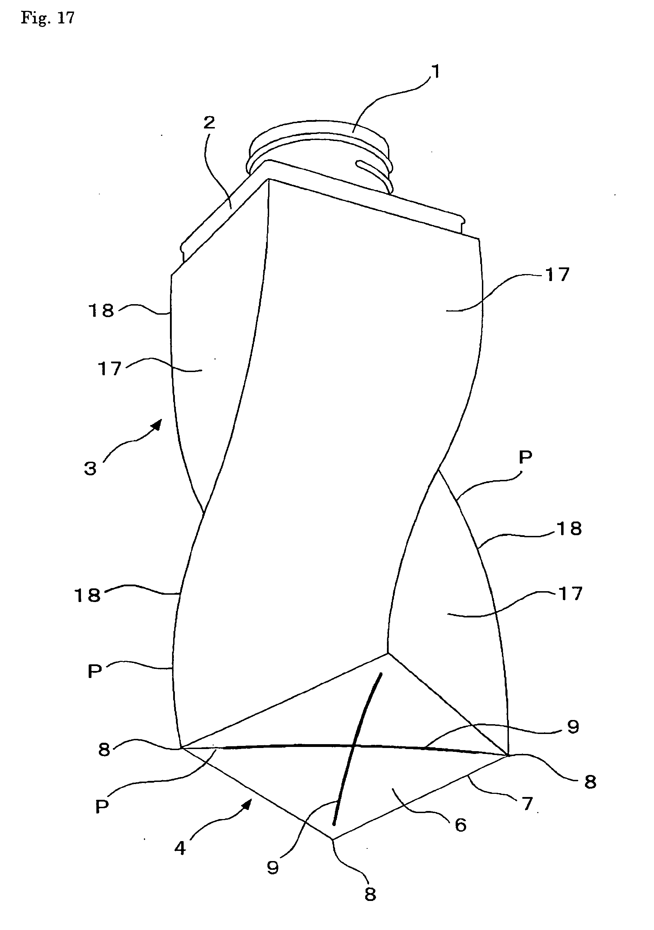

Figs. 17-21 show the container in the fourth embodiment of this invention. The container comprises a square body 3 with a lower end closed to form a bottom 4, a shoulder 2 connected to an upper end of the body 3, and a cylindrical neck 1 disposed on top of the shoulder 2 and provided with a screw thread carved on the outer peripheral surface. The entire container is transparent and has such thick walls that the container would not be easily deformed by strain.

The body 3 is a helically twisted square cylinder wherein four ridges 18 have been twisted in an identical helical shape. The ridges 18 and helical side walls 17 are disposed axisymmetrically with opposed ridges 18 and side walls 17, respectively, on a virtual central axis.

When the container is molded by a direct blow molding process, two halves of the mold leave a mark along their mating face, thus forming a parting line P. In this embodiment, this parting line P runs along the two ridges 18 diagonally opposed to each other among the four ridges 18. Since the parting line P is aligned with this pair of ridges 18, the parting line on the body 3 is inconspicuous, and it never gives the container unattractive appearance.

The bottom 4 is a slightly concave surface surrounded by the foot 7. The bottom wall 5 constitutes a main part of the bottom 4, and the bottom surface 6 is the underside of the bottom wall 5. The concave surface of the bottom 4 is obtained by gently curving and slightly caving in the bottom surface 6 upward. Four pinch-off lines 9 are left in the bottom surface 6 as the pinch-off marks.

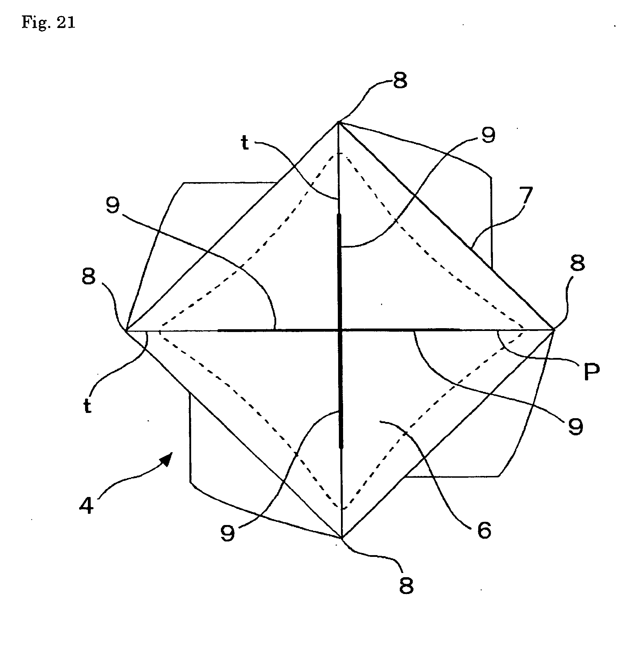

The pinch-off lines 9 (See Figs. 17 and 21) are disposed in the shape of a cross, thus forming two pairs of linearly aligned pinch-off lines 9. Each pair of them is positioned on a respective virtual diagonal line (t) on the bottom surface 6 in the square shape. One of the two diagonal lines (t) runs along the parting line P.

The blow molded container in this embodiment is obtained by a direct blow molding process. The parison 12 is extruded from an extruder by way of a die, and is clamped and pinched with a two-halved split mold. Blades of the pinch-off section of this split mold are disposed at the bottom of mold cavity. A lower portion of the parison 12 is pinched and pressed flatly by the blades, then thermally welded and sealed. At the upper end of the mold, an upper portion of the parison is also cut off by a parison cutter to form a cylindrical parison tube 12 that has the lower end closed. The parison 12 is then blow molded by blowing air into the parison through an air nozzle inserted from the top portion of the split mold.

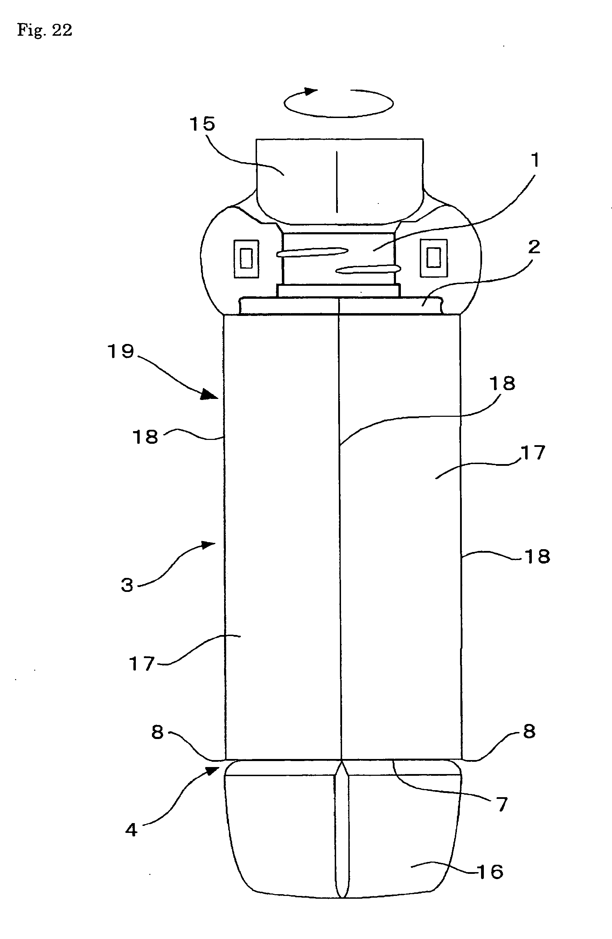

At that time, upper and lower portions of the parison 12 are pressed by the pinch-off sections of the mold to form cutoff portions 16, which are not completely pinched off but remain attached to the main portion of the parison 12 (See Fig. 22). The cutoff portions 16 are removed by pulling them away from the container immediately after release from the mold upon completion of the direct blow molding (See Fig. 22).

The pinch-off lines 9 can be formed in the shape of a cross, by using, among other blow molds, a bottom split mold 10 that enables the lower portion of the parison 12 to be divided into four parts to mold the bottom 4 of the blow molded container (See Fig. 4). A conventional two-halved split mold is utilized for the portions other than the bottom 4 of the blow molded container, including those portions to be molded into the body 3, the shoulder 2, and the neck 1.

Fig. 4 is an explanatory diagram in the form of a bottom view showing a process for pinching off the parison with the blades of the pinch-off section of the four-part bottom split mold 10.

If the parison 12 is blow molded while remaining pinched in the cross shape by the four-part pinch-off section 11 as shown in Fig. 4, then the container can be blow molded without any decrease in wall thickness because the four 'sides' of the molded foot 7 are near from the virtual central axis of drawing (See Fig. 21). Even at the corners 8 of the foot 7 that are more distant from the virtual central axis of drawing than the 'sides', there would be a substantially small rate of drawing, and thus, the extent to which the wall thickness is reduced would be kept small, because these corners 8 are located near the outermost ends of the pinch-off lines 9 formed by the pinch-off section 11.

If a thick wall is used for the parison 12 to give the molded container a texture resembling a glass bottle, a change in wall thickness in the bottom 4 would not have any adverse effect on the outer appearance of the container, because the wall thickness reduction is kept to a small extent.

If the container is filled with transparent contents having a different color than the color of the container, the irregularity in thickness of the bottom 4 would become directly visible due to the contents of a different color. Even in that case, a small variation of thickness would not result in poor appearance.

Fig. 22 shows a molded product 19 immediately after release. This released product is used to explain the process for molding the container of this invention. The released product 19 comprises a square body 3 with a lower end closed to form a bottom 4, a shoulder connected to an upper end of the body 3, and a neck disposed on top of the shoulder. A cutoff portion 16 remains attached to an area ranging from the shoulder to the neck, and another cutoff portion 16 remains attached to the bottom 4, respectively by way of a thin breaking portion.

After the release from the blow mold, this released product 19 is at a thermally deformable temperature. Each of the thin breaking portions is sandwiched between the molded product and a cutoff portion 16, and is formed by the pinch-off section 11 of the bottom split mold 10 and by the pinch-off section of the blow split mold.

The released molded product 19 is held firmly by both the upper and lower cutoff portions 16 of the parison. In this state, the molded product is twisted between the shoulder 2 and the bottom 4 of the product, to a desired central angle and on the virtual central axis of the product. In this way, the body 3 of the product is formed into a helical square shape.

In the case of the fourth embodiment shown in the drawings, the body was twisted to a rather high displacement angle of 45 degrees, but the twist was steady and secure with no trouble.

A clear, colorless container was molded from a parison 12 having a wall thickness of 3 mm, by using a draw ratio of the degree that the outermost ends of the pinch-off lines 9 imprinted in the bottom 4 were located at positions largely close to the corners 8 of the foot 7. This container was filled with clear, colored contents. A crystal-like pattern developed at the corners along which respective ridges 18 of the body 3 ran. Although this pattern got distorted due to irregular transmitted light, an optically decorative effect thus obtained was dynamic and profound.

## Claims

1. A direct blow molded container in a shape of a bottle made of a synthetic resin, which comprises:
a body (3) having its lower end closed to form a bottom (4), a shoulder (2) connected to an upper end of the body, a cylindrical neck (1) disposed on top of the shoulder, and at least three pinch-off lines (9) which are pinch-off marks imprinted in an outer bottom surface (6),
wherein said three or more pinch-off lines are disposed radially from a center of an outer surface of a bottom wall (5),
**characterized in that** the container comprises a square body and four pinch-off lines disposed in a shape of a cross,
wherein a linearly aligned pair of pinch-off lines, among the four lines, is positioned on a parting line (P),
wherein the body comprises a helically twisted square body, with each ridge (18) having an identical helical pattern, and
wherein a pair of ridges (18) diagonally opposed to each other, among the four ridges, is positioned on the parting line (P)

2. The blow molded container according to claim 1 wherein each pair of pinch-off lines is disposed linearly along one of respective diagonal lines on the bottom.

3. The blow molded container according to either one of claims 1 or 2 wherein the entire body has a thickness that gives hardness enough to prevent body walls from being easily strained and deformed.

4. The blow molded container according to either one of claims 1 to 3 wherein the entire container is made of a transparent or translucent synthetic resign

5. A process for producing a blow molded product, which comprises
molding a container in its basic structure having a square body (3) with a lower end closed to form a bottom (4), a shoulder (2) connected to an upper end of this square body, and a cylindrical neck (1) disposed on top of the shoulder,
and immediately after the molded container has been released from a blow mold, while at a still thermally deformable temperature, twisting the released product between the shoulder (2) and the bottom (4) at a given central angle on a virtual central axis of the released product to give the body a helical shape,
wherein the twist and displacement of the body (3) between the shoulder (2) and the bottom (4) is conducted by holding firmly the cutoff portions attached respectively to the shoulder and the bottom of the released product,
wherein the body comprises a helically twisted square body, with each ridge (18) having an identical helical pattern, and
wherein a pair of ridges (18) diagonally opposed to each other, among the four ridges, is positioned on a parting line (P).

## Patentansprüche

1. Direkt blasgeformter Behälter in Form einer Flasche, hergestellt aus Kunstharz, umfassend:
einen Rumpf (3), dessen unteres Ende geschlossen ist, um einen Boden (4) auszubilden, eine Schulter (2), welche an einem oberen Ende des Rumpfes angeschlossen ist, einen zylindrischen Hals (1), welcher an der Oberseite der Schulter angeordnet ist, und zumindest drei Quetschlinien (9), welche Quetschmarken sind, die in einer äußeren Bodenoberfläche (6) eingeprägt sind,
wobei die drei oder mehr Quetschlinien radial von einem Zentrum einer äußeren Oberfläche einer Bodenwand (5) angeordnet sind,
**dadurch gekennzeichnet, dass** der Behälter einen eckigen Rumpf und vier Quetschlinien umfasst, welche in Form eines Kreuzes angeordnet sind,
wobei ein linear ausgerichtetes Paar von Quetschlinien von den vier Linien auf einer Teilungslinie (P) positionier ist,
wobei der Rumpf einen schraubenförmig verdrehten eckigen Körper umfasst, wobei jede Kante (18) ein identisches schraubenförmiges Muster aufweist, und
wobei ein Paar von Kanten (18), welche diagonal einander gegenüberliegen, von den vier Kanten auf der Teilungslinie (P) positioniert ist.

2. Blasgeformter Behälter nach Anspruch 1, wobei jedes Paar von Quetschlinien linear entlang einer von jeweiligen diagonalen Linien auf dem Boden angeordnet ist.

3. Blasgeformter Behälter nach irgendeinem der Ansprüche 1 oder 2, wobei der gesamte Rumpf eine Dicke aufweist, welche hinreichend Härte bereitstellt, um zu verhindern, dass Rumpfwände einfach gedehnt und deformiert werden

4. Blasgeformter Behälter nach irgendeinem der Ansprüche 1 bis 3, wobei der gesamte Behälter aus einem durchsichtigen oder lichtdurchlässigen Kunstharz hergestellt ist

5. Verfahren zur Herstellung eines blasgeformten Produkts, welches umfasst
Formen eines Behälters in seiner Basisstruktur mit einem eckigen Körper (3), wobei ein unteres Ende zur Ausbildung eines Bodens (4) geschlossen ist, einer Schulter (2), die an einem oberen Ende dieses eckigen Körpers angeschlossen ist und einem zylindrischen Hals (1), der an der Oberseite der Schulter angeordnet ist,
und wobei unmittelbar nachdem der geformte Behälter aus einer Blasform freigegeben wurde, während dieser auf einer noch thermisch deformierbaren Temperatur ist, Verdrehen des freigegebenen Produkts zwischen der Schulter (2) und dem Boden (4), um einen gegebenen Zentralwinkel auf einer virtuellen Zentralachse des freigegebenen Produkts, um dem Körper eine schraubenförmige Form zu geben,
wobei das Verdrehen und Versetzen des Körpers (3) zwischen der Schulter (2) und dem Boden (4) durch festes Halten der Abstichabschnitte durchgeführt wird, welche jeweils an der Schulter und dem Boden des freigegebenen Produkts angefügt sind, wobei der Rumpf einen schraubenförmig verdrehten eckigen Körper umfasst, wobei jede Kante (18) ein identisches schraubenförmiges Muster aufweist, und
wobei ein Paar von Kanten (18), welche einander diagonal gegenüberliegen, von den Kanten auf einer Teilungslinie (P) positioniert ist.

## Revendications

1. Récipient moulé par soufflage direct, ayant une forme de bouteille, réalisé en une résine synthétique, qui comprend :
un corps (3) dont l'extrémité inférieure est fermée pour former un fond (4), un épaulement (2) relié à une extrémité supérieure du corps, un col cylindrique (1) disposé sur la partie supérieure de l'épaulement, et au moins trois lignes de pincement (9) qui sont des marques de pincement imprimées dans une surface extérieure (6) du fond,
dans lequel lesdites trois lignes de pincement ou davantage sont disposées de manière radiale à partir d'un centre d'une surface extérieure d'une paroi de fond (5) ;
**caractérisé en ce que** le récipient comprend un corps carré et quatre lignes de pincement disposées en forme de croix,
dans lequel, parmi les quatre lignes, une paire de lignes de pincement alignées de manière linéaire est positionnée sur une ligne de séparation (P),
dans lequel le corps comprend un corps carré à torsion en forme d'hélice, dont chaque arête (18) présente un motif en hélice identique, et
dans lequel une paire d'arêtes (18) opposées l'une à l'autre de manière diagonale, parmi les quatre arêtes, est positionnée sur la ligne de séparation (P)

2. Récipient moulé par soufflage selon la revendication 1, dans lequel chaque paire de lignes de pincement est disposée de manière linéaire le long de l'une des lignes diagonales respectives sur le fond

3. Récipient moulé par soufflage selon l'une ou l'autre des revendications 1 et 2, dans lequel le corps tout entier a une épaisseur qui confère aux parois du corps une dureté suffisante pour empêcher celles-ci d'être facilement contraintes et déformées

4. Récipient moulé par soufflage selon l'une ou l'autre des revendications 1 à 3, dans lequel le récipient tout entier est réalisé en une résine synthétique transparente ou translucide

5. Procédé pour la réalisation d'un produit moulé par soufflage, qui consiste à :
mouler un récipient, ayant en tant que structure de base, un corps carré (3) avec une extrémité inférieure formée pour former un fond (4), un épaulement (2) relié à une extrémité supérieure de ce corps carré, et un col cylindrique (1) disposé sur la partie supérieure de l'épaulement,
et, immédiatement après que le récipient moulé ait été libéré d'un moule par soufflage, tant qu'il est encore à une température permettant une déformation thermique, tordre le produit libéré entre l'épaulement (2) et le fond (4) selon un angle central donné situé sur un axe central virtuel du produit libéré afin de donner au corps une forme en hélice,
dans lequel la torsion et le déplacement du corps (3) entre l'épaulement (2) et le fond (4) sont obtenus en maintenant fermement les parties de coupure attachées respectivement à l'épaulement et au fond du produit libéré,
dans lequel le corps comprend un corps carré à torsion en forme d'hélice, dont chaque arête (18) présente un motif en hélice identique, et
dans lequel une paire d'arêtes (18) opposées l'une à l'autre de manière diagonale, parmi les quatre arêtes, est disposée sur une ligne de séparation (P)
